# EUROPÄISCHE PATENTSCHRIFT

(11) **EP 1 742 274 B1**
(45) Veröffentlichungstag und Bekanntmachung des Hinweises auf die Patenterteilung: **29.09.2010**
(21) Anmeldenummer: 06116189.9
(22) Anmeldetag: 28.06.2006
(51) Int. Cl.: H01L 31/042

(54) **Flexibles Solarstrommodul mit einer im Rahmen integrierten Stromführung**
Flexible solar module with electrical conductor integrated in the frame
Module solaire avec un conducteur électrique intégré dans le cadre

(30) Priorität: 07.07.2005 DE 102005032716
(43) Veröffentlichungstag der Anmeldung: 10.01.2007
(73) Patentinhaber: PVflex Solar GmbH, 15517 Fürstenwalde (DE); Bayer MaterialScience AG, 51368 Leverkusen (DE)
(72) Erfinder: Kalberlah, Klaus, 12435, Berlin (DE); Schlemper,Klaus, Dr., 12524, Berlin (DE); Ehbing, Hubert, Dr., 51519, Rothental-Erberich (DE); Schauseil, Frank, 51373, Leverkusen (DE)
(74) Vertreter: Hengelhaupt, Jürgen

(56) Entgegenhaltungen:
- US-A- 4 571 446
- US-A- 4 611 090
- US-B1- 6 283 542

## Beschreibung

Weit über 90% aller derzeit produzierten Solarstrom-Module bestehen aus "Solarzellen", die auf einer Seite mit einer Glasscheibe, auf der anderen Seite mit einer speziellen Kunststoff-Folie oder mit einer weiteren Glasscheibe abgedeckt sind. Eine derartige Einbettung von Solarzellen wird als "Laminat" bezeichnet. Versehen mit einer Rahmung, die zumeist aus Alu-Profil besteht, und einem rückseitigen, elektrischen Anschluss wird aus dem Laminat das verkäufliche Endprodukt, ein "Solarmodul". Es versteht sich, dass derartige Module nicht flexibel und damit wenig geeignet sind zur Gebäude-Integration durch Verklebung.

Als "Folienmodul" bezeichnet man die Einbettung von Solarzellen zwischen zwei Kunststoff-Folien, ggf. auch zwischen einer vorderseitigen, lichtdurchlässigen Folie und einem biegsamen Blech (Alu oder Edelstahl) auf der Rückseite. Derartige Folienmodule sind begrenzt flexibel, werden vorzugsweise im Campingbereich eingesetzt und sind, wegen fehlender Hagelschlagsicherheit, im Bereich Gebäude-Integration ebenfalls nicht einsetzbar.

Ein flexibles Folienmodul, das kristalline Silizium-Zellen nutzt und zugleich hagelschlagsicher ist, wurde in DE 103 56 690 vorgeschlagen. Hierbei ist eine "Durchverdrahtung" zwar vorgesehen, jedoch in das Laminat eingearbeitet. Die Patentschrift DE 100 48 034 sieht ebenfalls eine Durchverdrahtung in einem flexiblen, zur Dachintegration durch Verklebung vorgesehenen Modul ("BIPV-Modul, building integrated photovoltaic-Module) vor. In beiden Fällen ist jedoch von einer Rahmung und der Integration der Durchverdrahtung in den Rahmen keine Rede.

Weltweit einzigartig sind Folienlaminate "UNlsolar®", die aus einer Einbettung von Zellen aus amorphem Dünnschicht-Silizium, auf dünnes Edelstahl-Blech gedampft, zwischen zwei Kunststoff-Folien bestehen. Sie sind somit sowohl flexibel als auch hagelschlagsicher und werden speziell für die Verklebung mit glatten Dachmaterialien wie Stahlblech, Titanzink-Blech etc. hergestellt.

Seit einigen Jahren werden derartige UNIsolar®-Laminate zur Herstellung von "BIPV-Anlagen" beispielsweise von der Firma THYSSEN-HOESCH verwendet und unter der Bezeichnung "Solartec®" vermarktet. Eine Rahmung der Laminate erfolgt hierbei nicht; vielmehr wird die meist mehrere Meter lange "solare Rollenware" im Werk auf die Dachscharen aufgeklebt und relativ aufwändig an mindestens einer Stelle pro Laminat mit einem rückseitigen Kabelanschluss versehen, der unvermeidlich einen Durchbruch in der Dacheindeckung bedeutet. Die werksseitige Verklebung der Laminate auf die bis zu 8 Meter langen Dachscharen ist prinzipiell eine ungünstige Lösung, weil jede Dachschare individuell passend (in Länge und Farbe etc) im Werk des Herstellers für das Dachmaterial gefertigt werden muss. Dies ist nicht nur eine Folge der Verklebetechnik (mittels Heiztisch 130°C und EVA- Schmelzkleber), sondern vor allem durch die rückseitige elektrische Anschlusstechnik bedingt, die am Bau nicht fachgerecht ausgeführt werden kann.

Die derzeitige BIPV-Technologie, wie sie z.B. von der Firmen HOESCH und RHEINZINK unter Zukauf von flexiblen UNIsolar® - Laminaten realisiert wird, zeigt also einige gravierende Nachteile: Verklebung und Kabelanschluss erfolgen werksseitig, nicht am Bau, sodass neben dem Transportproblem von bis zu 8m langen Profilen aus dünnem Blech die Erschwernis besteht, das ganze Dach "custom made" zu produzieren, statt Standardware massenweise zu verkaufen. Üblicherweise wird nämlich das Dachmaterial als Rollenware geliefert und das Profil erst am Bau (in passender Länge) hergestellt (z.B. "Profilomat"-Technologie der Fa. RHEINZINK). Nachteilig ist weiterhin, dass die elektrische Verschaltung der zahlreichen Anschlusspunkte am Bau vergleichsweise aufwändig ist. Ferner ist die Gefahr relativ groß, die empfindliche Solartechnik beim Transport und bei der Montage der Dachscharen (z.B. mittels "Falzomat"-Technologie der Fa. Rheinzink) zu beschädigen.

Ein Teil der vorgenannten Nachteile wird durch die Patentanmeldung DE 100 48 034 bereits mehr oder weniger befriedigend gelöst. Würde man darüber hinaus eine flexible Rahmung der Laminate anstelle einer ungerahmten Selbstklebe-Technik verwenden, so böte dies entscheidende Verbesserungen:
a) "Kantenschutz" gegen Delamination und gegen Eindringen von Feuchtigkeit, d.h. Absicherung gegen Degradation der Zellen
b) Zusätzliche Isolierung spannungsführender Teile (Schutzklasse II Aufbau)
c) Einfache Integration der Modul-Steckverbindung
d) Vorkehrungen zur dauerhaften Verklebung und Abdichtung zum Untergrund
e) Verwendung einer frontseitigen Schutzfolie mit Haftung am Rahmen
f) professionelles Design; Modul auch ohne Selbstklebung verwendbar

Die beiden Patente US 4 830 038 und US 5 008 062 scheinen die Idee vorweg zu nehmen, flexible Solar-Laminate mit einem Rahmen zu versehen, der aus Kunststoff mittels RIM (reaction injection moulding) gefertigt wurde. Tatsächlich aber bestehen wesentliche Unterschiede:
a) das entsprechend den US-Patenten zu verkapselnde Solar-Laminat ist eine Glasplatte, sodass ein flexibles Modul nicht entstehen kann, was auch nicht die Aufgabenstellung ist. Ausdrücklich wird vielmehr vom Gegenteil, d.h. von Versteifung bzw. einem Schutz der Glasplatte (gegen Bruch) gesprochen.
b) die US-Patente beabsichtigen nicht eigentlich eine Rahmung, sondern eine vollständige Verkapselung ("enclosure") des gläsernen Laminates, was ausdrücklich die Kunststoff-Beschichtung der Rückseite durch RIM einschließt
c) entsprechend den US-Patenten werden zwar die Verbindungs-Leitungen zwischen den Solarzellen und dem Modul-Anschluss in den Kunststoff eingebettet, von einer Durchverdrahtung zur Verschaltung mit nebenliegenden Modulen ist jedoch mit keinem Wort die Rede.
d) Da der für das RIM-Verfahren verwendete Kunststoff an Glas einwandfrei haftet und sich ein Laminat aus Glas bei der RIM-Kapselung auch nicht durchbiegen kann, ist die Aufgabenstellung, welche der vorliegenden Erfindung zugrunde liegt, eine völlig andere.

US 6,283,542 B1 sowie US-A-4 611 090 zeigen ein weiteres Solarmodul mit Kunststoffrahmen. Weiterhin ist aus EP 1 225 642 ein Verfahren bekannt, Solarmodule mit einem Rahmen und einer Rückseite aus einem elastomerem Polyurethan zu hinter- und umschäumen. Hierbei wird vorzugsweise das Reaction Injection Molding (RIM)-Verfahren verwendet. Die vorgenannte Veröffentlichung beschreibt jedoch nicht, dass die Solarmodule die erfindungsgemäße Eigenschaft besitzen, flexibel sind. Weiterhin wird zwar ausdrücklich erwähnt, dass in den Rahmen "Befestigungsteile" integriert werden können, die Integration einer Durchverdrahtung wird jedoch nicht erwähnt. Die Integration einer Durchverdrahtung in den Modul-Rahmen ist bei Standardmodulen auch nicht naheliegend, weil sie nicht rückseitig verklebt werden bzw. nicht vollflächig auf einer Unterlage aufliegen müssen. Üblich ist vielmehr eine rückseitige Anschlussbox und eine Kabelverbindung zu den nebenliegenden Modulen.

Weiterhin ist nach EP 1 225 642 zwar vorgesehen, dass zusammen mit dem Rahmen zugleich auch die Laminat-Rückseite mit einer Kunststoff-Schicht abgedeckt wird, jedoch ist nicht davon die Rede, dass eine rückseitige Abdeckung des Laminats sehr viel vorteilhafter dadurch erfolgen kann, dass das Laminat vor dem Einlegen in die Form zur Rahmung hiermit bereits versehen ist. Letztere kann auf diese Weise auch aus einem anderen Material als der Rahmen bestehen, im Unterschied zur gleichzeitigen Rahmung und Hinterschäumung.

Versuche, eine flexibles Laminat der Marke "UNIsolar®" nach dem in EP 1 225 642 beschriebenen Verfahren zu rahmen, konnten aus zwei Gründen nicht erfolgreich sein:
(1) Für die Vorderseite von flexiblen Solarmodulen wird üblicherweise eine Teflon®-Folie verwendet, um schmutzabweisende Eigenschaften zu erreichen. Dies führt nahezu zwangsläufig dazu, dass eine Enthaftung des Rahmens vorderseitig stattfindet, d.h. eine dauerhaft feuchtigkeitssichere Abdichtung wegen der mangelhaften Verklebung der Materialien Teflon® und beispielsweise Polyurethan nicht erreicht wird.
(2) Ebenso unvermeidlich führt die rückseitige Abdeckung des flexiblen Laminats durch Umschäumen mit beispielsweise Polyurethan zu einer Verbiegung des Laminats. Ursache hierfür ist die Tatsache, dass der Kunststoff für die Rückseite beim RIM-Prozess schrumpft und ein anderes Wärmeausdehnungsverhalten besitzt als das Solar-Laminat. Beim Abkühlen des Laminats nach dem rückseitigen Hinterspritzen kommt es damit zur unerwünschten Durchbiegung des fertigen Moduls.

Die vorliegende Erfindung geht aus von einem flexiblen, glaslosen Solarmodul mit einem umlaufenden und die Kanten eines flexiblen Laminats umschließenden Rahmen aus Kunststoff. Das Solarmodul zeichnet sich dadurch aus, dass der Rahmen aus Kunststoff von dauerelastisch-biegsamer Konsistenz besteht und dass in diesen eine flach-bandförmige Durchverdrahtung eingeformt ist, die umlaufend in unmittelbarer Nähe der Rahmen-Innenkante auf einer Vorderseite des Laminats verläuft und fest mit diesem verbunden ist.

Vorzugsweise sind an den Enden der Durchverdrahtung Steckbuchsen angebracht, die in den Rahmen eingeformt sind. Eine Rückseite des Laminats kann ferner durch eine biegsame Platte aus Kunststoff oder Metall abgedeckt sein, die insbesondere aus PVC-Hartschaum besteht. Alternativ kann die Rückseite des Laminats durch eine Schicht aus witterungsbeständigen, geschlossen-porigen, weich dauer-elastischen Schaumstoff abgedeckt sein. Eine Dicke der Schaumstoff-Schicht kann größer sein als die Dicke des Rahmens auf seiner Unterseite. Die Schaumstoff-Schicht kann rückseitig ganz oder teilweise mit einer Selbstklebe-Schicht versehen sein und an den Stellen, die selbstklebend sind, mit einer abziehbaren Schutzfolie ausgestattet sein. Auf einer Rückseite des Rahmens kann eine umlaufende Abdichtung aus dauerelastischem Dichtmaterial angebracht sein. Die Abdichtung kann eine Rundschnur aus Butylkautschuk mit einer abziehbaren Schutzfolie sein. In die Rahmenunterseite kann eine umlaufende Hohlkehle zur Aufnahme der Dichtung eingeformt sein. Der Rahmen kann Befestigungslochungen erhalten, welche an den Ecken des Rahmens an den Stellen der Überlappung der bandförmigen Durchverdrahtung durch diese hindurchgehen und durch Kunststoff-Buchsen gegen Witterungseinfluss sowie unbeabsichtigten elektrischen Kontakt mit Befestigungsschrauben geschützt sind.

Ein weiterer Aspekt der Erfindung liegt in der Bereitstellung eines Verfahrens zur Herstellung eines flexiblen, glaslosen Solarmoduls mit einem umlaufenden und die Kanten eines flexiblen Laminats umschließenden Rahmen aus Kunststoff, wobei der Rahmen aus Kunststoff von dauerelastisch-biegsamer Konsistenz besteht und in diesen eine flach-bandförmige Durchverdrahtung eingeformt ist, die umlaufend in unmittelbarer Nähe der Rahmen-Innenkante auf einer Vorderseite des Laminats verläuft und fest mit diesem verbunden ist. Das Verfahren zeichnet sich dadurch aus, dass der Rahmen nach dem RIM-Verfahren (reaction injection molding) hergestellt wird, wobei in eine Form zur Rahmenherstellung ein flexibles Laminat eingelegt wird, nachdem auf dessen Vorderseite umlaufend flach-bandförmige Durchverdrahtungen fest verbunden und an den Enden mit Steckbuchsen versehen wurden.

Vorzugsweise erfolgt die feste Verbindung der bandförmigen Durchverdrahtung am Laminat durch Vernieten und/oder Verkleben. Ferner ist bevorzugt, dass eine Rückseite des Laminats durch eine biegsame Platte aus Kunststoff oder Metall abgedeckt ist und dass die Platte vor dem Einbringen in eine Form zur Rahmenherstellung durch RIM rückseitig auf dem Laminat fixiert wird. Bevorzugt ist weiterhin, dass die Rückseite des Laminats durch eine Schicht aus witterungsbeständigen, geschlossen-porigen, weich dauer-elastischen Schaumstoff abgedeckt ist und dass die Schicht aus Schaumstoff vor dem Einbringen in die Form zur Rahmenherstellung durch RIM rückseitig auf dem Laminat verklebt wird. Schließlich ist bevorzugt, dass der Rahmen Befestigungslochungen erhält, welche an den Ecken des Rahmens an den Stellen der Überlappung der bandförmigen Durchverdrahtung durch diese hindurchgehen und durch Kunststoff-Buchsen gegen Witterungseinfluss sowie unbeabsichtigten elektrischen Kontakt mit Befestigungs-Schrauben geschützt sind und dass vor dem Einbringen des Laminats in die Form zur Rahmenherstellung durch RIM die Lochungen für die Befestigung durch das Laminat und die Überlappung der Durchverdrahtung hindurchgehend vorgenommen und die Buchsen aus isolierendem Kunststoff in die Befestigungslochungen eingesetzt werden.

Die vorliegende Erfindung beschreibt demnach u. a. ein Verfahren, um dennoch flexible Laminate, z.B. der Marke "UNIsolar® mit einem Polyurethan mittels RIM-Technologie zu rahmen. Die vorgenannten Nachteile der vorderseitigen Enthaftung und der Durchbiegung werden nämlich vermieden, indem vorderseitig auf die Teflonfolie zunächst die Durchverdrahtung, bestehend vorzugsweise aus einem flachen Kupferband aufgebracht und durch Vernieten und/oder durch eine Spezial-Verklebung dauerhaft mit dem Laminat verbunden wird. Der Rahmen verklebt seinerseits sicher mit dem Kupferband, sodass die ohne Durchverdrahtung beobachtete, nachteilige Enthaftung von Rahmen und Laminat nicht auftritt.

Weiterhin wird die Rückseite des Laminats vor der Rahmen-Herstellung mit einer Abdeckung, beispielsweise mit einer geschäumten oder kompakten Kunststoff-Platte versehen. Diese Platte schrumpft oder erwärmt sich bei dem Rahmungsprozess nicht, sodass die nachteilige Durchbiegung des Laminats, welche bei der Umschäumung der Rückseite mit Rahmenmaterial auftritt, unterbleibt. Gleichzeitig entsteht bei dem RIM-Vorgang eine innige Verklebung zwischen dem Rahmen und der zum Rahmen angrenzenden Kante der rückseitigen Platte, sodass einerseits eine ausreichende mechanische Halterung der rückseitigen Platte, andererseits eine verlässliche Abdichtung gegen Feuchtigkeit auch rückseitig gewährleistet ist.

Die Verkapselung der Rückseite bleibt auf diese Weise auch dann intakt, wenn die Verklebung zwischen Platte und Laminat-Rückseite fehlt oder unbefriedigend ist. Ebenso wie die vorderseitige Haftung bereitet nämlich die Verklebung mit der Rückseite mancher Laminate (z.B. von UNI-solar® - Laminaten wegen ihrer Tedlar®-Rückseite) Schwierigkeiten.

An Stelle der rückseitigen Platte aus geschäumtem oder kompaktem Kunststoff kann auch ein Schichtenaufbau verwendet werden, der das fertige Modul dauerelastisch selbstklebend macht. Hierzu ist, wie an anderer Stelle bereits vorgeschlagen (DE 100 48 034) eine geschlossenporige Schaumstoffschicht geeignet, die an ihrer Unterseite mit Klebefolie beschichtet und mit einer abziehbaren Schutzfolie (z.B. Silikonpapier) abgedeckt ist. Auch hier bildet sich, wenn das Laminat zusammen mit dem beschriebenen Schichtaufbau in die Form zur Herstellung des Rahmens mittels RIM-Technologie eingelegt wird, eine innige Verbindung zwischen Rahmen und der Schnittkante der rückseitigen Schaumstoff-Abdeckung. Zugleich wird vorgeschlagen, die Schaumstoffschicht dicker als die Unterseite des Rahmens zu bemessen, damit bei der Verklebung auf dem Dach der Modul nicht auf dem Rahmen aufliegt, sondern die ausgleichende Funktion des Schaumstoffs wirksam werden kann.

Die vorliegende Erfindung besteht also unter anderem darin, das in EP 1 225 642 vorgestellte Rahmungsverfahren für flexible Laminate zu modifizieren. Hierzu ist es möglich, die Steifigkeit des Kunststoff-Materials gering einzustellen und auf Füllstoffe weitgehend zu verzichten, so dass der Rahmen selbst biegbar bleibt. Letzteres ist nicht naheliegend, weil bei Laminaten aus Glas zur Anpassung des thermischen Ausdehnungskoeffizienten und zur Vermeidung von Biegespannungen der Füllstoffgehalt eher hoch eingestellt und die hieraus resultierende Steifigkeit des Rahmens als Vorteil angesehen wird.

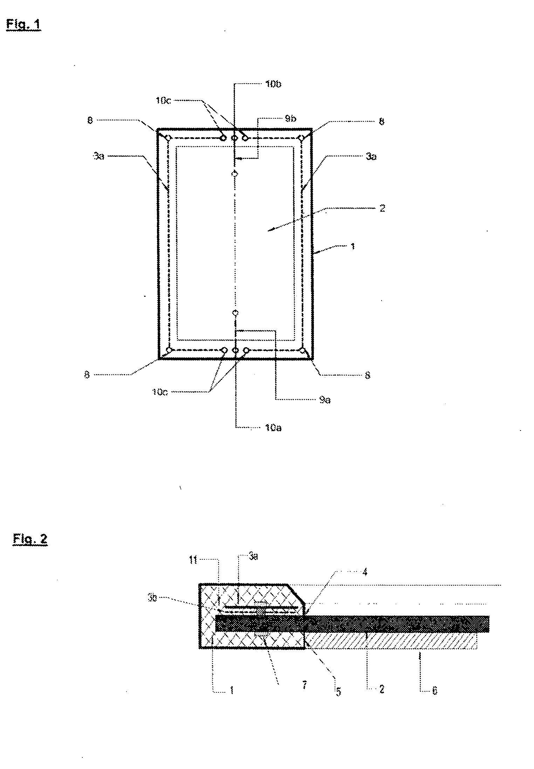

Ferner wird die an sich problematische Haftung des Rahmens auf der Vorderseite des Laminats erreicht durch eine "Haftungsvermittlung" via Durchverdrahtung. Erfindungsgemäß wird die Durchverdrahtung, welche sonst innerhalb des Laminats (siehe DE 103 56 690, Fig. 6) oder auf der Laminat-Rückseite (siehe DE 100 48 034, Fig.2) verläuft, umlaufend an den Rand der Vorderseite verlegt, sodass sie dort die Doppelfunktion eines elektrischen Leiters und der "Haftvermittlung" übernimmt.

Da die Laminat-Rückseite einerseits vollflächig abgedeckt und gegen Feuchtigkeit geschützt werden muss, andererseits eine Durchbiegung, wie sie entstünde bei der gleichzeitigen Erzeugung von Rahmen und Rückseite nach der in EP 1 225 642, US 5 008 062 und US 4 830 038, nicht akzeptiert werden kann, wird die rückseitige Abdeckung als zusätzliches, fertiges Teil (Platte oder Schaumstoff-Schicht) ausgebildet und dieses vor dem Einlegen des Laminats in die Form zur RIM-Umschäumung an der Laminat - Rückseite zu fixiert.

Es wäre selbstverständlich möglich, eine derartige rückseitige Abdeckung nach der Rahmen-Herstellung einzufügen, jedoch bedeutet dies einen zusätzlichen BearbeitungsSchritt, wobei dann die Frage von Haftung und Abdichtung zwischen Platte und Rahmen allein schon auf Grund der bei flexiblen Solarlaminaten unvermeidlichen Maßtoleranzen gewisse technologische Schwierigkeit aufwirft.

Das beschriebene flexible Modul mit der rückseitigen Kunststoffplatte nachfolgend mit einem Selbstklebe-Aufbau auszustatten, ist leicht möglich. Vorzugsweise wird hierzu erstens eine dauerelastische Abdichtung zwischen Modul und Unterlage durch ButylKautschuk bereits werksseitig umlaufend auf der Rahmen-Unterseite angebracht. Zweitens wird eine zuverlässige Verklebung durch bauseitigen Auftrag eines geeigneten Klebstoffs, z.B. eines MS-Polymer-Klebers, der als Kartuschen-Ware mitgeliefert werden kann, erreicht. An der Baustelle wird also zunächst die Schutzfolie über dem ButylKautschuk abgezogen, dann an 4 bis 6 Stellen auf der Kunststoffplatte Klebstoff aufgetragen und schließlich der Modul auf den Untergrund, beispielsweise auch auf Beton oder Bitumen-Dachbahnen, aufgepresst. Diese Dicht- und Verklebetechnik (2 Systeme) eignet sich auch für bereits vorhandene oder schwierige Untergrund-Material ien.

Handelt es sich um neue, d.h. saubere, trockne und fettfreie Untergrund-Materialien, beispielsweise Dachscharen aus Titanzinkblech (der Fa. RHEINZINK) oder aus farbig lackiertem Aluminium (FALZONAL® der Fa. ALCAN), so kann eine ausreichend sichere und dichtende Verklebung auch durch eine rückseitige Schicht von geschlossenporigem Schaumstoff, beschichtet mit Acrylat-Klebefolie, erreicht werden. Es lassen sich dann die Kosten der rückseitigen, biegsamen Kunststoff-Platte einsparen, indem an ihrer Stelle ein selbstklebender Aufbau mit weichem Schaumstoff auf der Rückseite des Laminats fixiert und zusammen mit dem Laminat in die Form zur Rahmenherstellung eingelegt wird. Allerdings sollte, um die elastischen Eigenschaften auszunutzen und so eine einwandfreie Haftung auf dem Dachmaterial zu gewährleisten, der Selbstklebe-Schaumstoff eine größere Dicke als die Unterseite des Rahmens aufweisen.

Die Erfindung wird nachfolgend an Hand von einer Prinzip-Zeichnung (Fig.1) und drei Ausführungsbeispielen (Fig. 2-4) näher erläutert:
Fig. 1 zeigt schematisch eine Aufsicht auf das erfindungsgemäße BIPV-Modul. Das flexible Laminat (2) ist mit einem biegsamen Kunststoff-Rahmen (1) umgeben; eingeschäumt in diesen ist umlaufend die Durchverdrahtung (3a), nicht zu verwechseln mit der elektrischen Anschluss-Verdrahtung der Zellen (9a, 9b). Entsprechend werden 2 Buchsen für den Modul-Anschluss (10a, 10b) und 4 Buchsen für die Steckverbindung der Durchverdrahtung (10c) gezeigt. In den Ecken des Modul-Rahmens gibt es 4 Befestigungs-Lochungen (8), die durch das Flachband der Durchverdrahtung (3a) hindurchgreifen, wobei ein elektrischer Kontakt durch jeweils eine vor dem Verschäumen eingefügte Kunststoff-Buchse (nicht gezeichnet) verhindert wird.
Fig. 2 zeigt einen Schnitt durch den Rahmen des erfindungsgemäßen BIPV-Moduls ohne Vorkehrungen zur Dachverklebung. Das flexible Laminat (2) ist mit einer biegsamen Kunststoff-Rahmung (1) umgeben, wobei die frontseitige Haftung des Rahmens erreicht wird durch über das Kupferband der Durchverdrahtung (3a), das durch Nieten (7) form - und kraftschlüssig am Laminat (2) befestigt und zusätzlich mit Klebeband (3b) fixiert ist. Die Stelle eines potentiellen Wassereintritts (4) liegt in unmittelbarer Nähe des Kupferbandes (ca. 1mm Abstand) und ist somit dauerhaft abgedichtet. Eventuelle Maßtoleranzen in der Breite des flexiblen Laminats (2) werden im Bereich (11) ausgeglichen, sodass der Rahmenabstand vom Kupferband hierdurch nicht beeinflusst wird. Rückseitig ist das flexible Laminat (2) mit einer biegbaren PVC-Hartschaum-Platte (6) versehen. Da die Platte (6) zusammen mit dem Laminat in die Form zur Rahmenherstellung (durch RIM) eingelegt wurde, ist gewährleistet, dass an der Stelle (5) eine innige Verbindung zwischen Rahmen (1) und Platte (6) entsteht.

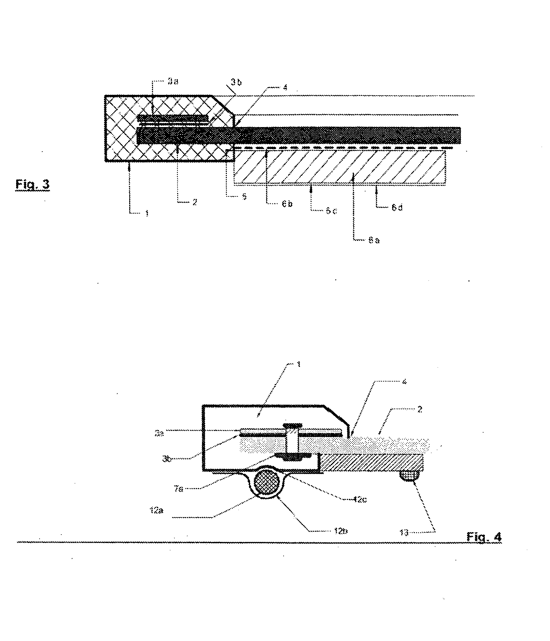

Fig. 3 zeigt das flexible Laminat (2) mit Kunststoff-Rahmung (1), wobei die frontseitige Haftung wiederum über das Kupferband (3a) erreicht wird, das durch eine geeignete Klebstoffschicht (3b) mit dem Laminat (2) verbunden ist. Rückseitig wurde das flexible Laminat (2) vor dem Einlegen in die Form zur Rahmenherstellung mit einer dauerelastischen Schaumstoff-Lage (6a) versehen und mit Klebefolie (6b) am Laminat fixiert, wobei die weiche Schaumstoff-Schicht (6a) unterseitig eine für den Verbund mit neuwertigen Dachmaterialien geeignete Klebeschicht (6c) und die übliche, abziehbare Schutzfolie (6d) aufweist. Die Dicke der Schaumstoff-Schicht (6a) ist dabei höher als die Dicke der Unterseite des Rahmens (2).
Fig. 4 zeigt den erfindungsgemäßen flexiblen Modul ähnlich Fig. 2, jedoch mit zusätzlichen rückseitigen Vorkehrungen zur Verklebung auf alten oder schwierigen Untergründen. Eingeformt in den Rahmen (1) ist eine umlaufende Hohlkehle (12c), in welche nach der Rahmung werksseitig eine Dichtschnur (12a) aus dauerhaft klebenden Butylkautschuk eingebracht wurde. Die Abdeckfolie (12b) wird bauseitig vor der Verklebung des Moduls entfernt, wie auch die einzelnen Klebstoff-Punkte (13) bauseitig aufgebracht werden.

Die aus Fig. 2 bereits bekannte, sichere Verbindung der Durchverdrahtung (3a) mit dem Laminat (2) durch Nieten (7) wird unterstützt durch das unterseitige Einlegen einer Scheibe (7a) beispielsweise aus Alu, wodurch der Polyurethan-Rahmen auf der Laminat-Unterseite zusätzliche Punkte der Verankerung durch Verklebung mit den Scheiben erhält.

Die Vorteile des erfindungsgemäßen Produktes gegenüber handelsüblicher BIPV (z.B. Solartec® von THYSSEN) sind, dass der Modul auf beliebige glatte, auch gekrümmte Flächen von Baukonstruktionen, beispielsweise auf Dacheindeckungen oder Fassadenverkleidungen
(1) bauseitig aufgebracht wird, d.h. auch auf bereits vorhandenen, "alten" Gebäudeflächen zum Einsatz kommt;
(2) auf fast allen Untergründen, beispielsweise auch auf Beton oder Bitumen-Dachbahnen, dauerhaft verklebbar ist;
(3) die elektrische Verbindung der Module in deren Rahmen enthalten ist bzw. durch Steckverbindungen auf der Dach-Oberseite hergestellt wird, sodass Durchbrüche der Dachhaut nur an sehr wenigen Stellen erforderlich sind;
(4) die objektbezogene Einzelfertigung der solaren Dacheindeckung beim Hersteller incl. ihrem erheblichen Transportaufwand entfällt
(5) der Modul einen wesentlichen Qualitätszuwachs (z.B. hinsichtlich Degradation, Delamination, Erdschlüsse etc.) erfährt, da durch die Rahmung ein Kantenschutz und eine "Entkoppelung" der rückseitigen Abdichtung von der Verklebung mit dem Unter-material erreicht wird; und
(6) das Modul mit einer vorderseitigen Schutzfolie ausgestattet werden kann; da die Schutzfolie auf der Teflon-Vorderseite des Laminats nicht haftet, findet Schutzfolie bisher keine Verwendung bzw. lässt sich der Anspruch 7 in DE 100 48 034 nicht ohne Rahmen realisieren.

Verschiedene Detail-Verbesserungen sind den Unteransprüche zu entnehmen, z. B. hat die Verwendung einer rückseitigen Platte aus PVC-Hartschaum den Vorteil, dass dieses Material sehr leicht ist, dass die Schnittkanten eine Struktur aufweisen, die eine innige Verbindung mit dem Rahmen beim RIM-Prozess begünstigt und dass derartiges Plattenmaterial als preiswertes Standardprodukt am Markt zur Verfügung steht.

Die Anordnung der zusätzlichen Befestigungslochungen in den Ecken und durch die bandförmige Durchverdrahtung hindurchgreifend hat den Vorteil, dass dort in der Überlappung der Kupferbänder eine besonders stabile mechanische Versteifung des Rahmens vorliegt und der Leitungsquerschnitt für die elektrische Stromführung unbedenklich durch die Lochung reduziert werden kann.

## Patentansprüche

1. Flexibles, glasloses Solarmodul mit einem umlaufenden und die Kanten eines flexiblen Laminats (2) umschließenden Rahmen (1) aus Kunststoff,
**dadurch gekennzeichnet,**
**dass** der Rahmen (1) aus Kunststoff von dauerelastisch-biegsamer Konsistenz besteht und dass in diesen eine flach-bandförmige Durchverdrahtung (3a) eingeformt ist, die umlaufend in unmittelbarer Nähe der Rahmen-Innenkante auf einer Vorderseite des Laminats (2) verläuft und fest mit diesem verbunden ist.

2. Flexibles Solarmodul nach Anspruch 1,
**dadurch gekennzeichnet,**
**dass** an den Enden der Durchverdrahtung (3a) Steckbuchsen (10c) angebracht und in den Rahmen (1) eingeformt sind.

3. Flexibles Solarmodul nach Anspruch 1,
**dadurch gekennzeichnet,**
**dass** eine Rückseite des Laminats (2) durch eine biegsame Platte (6) aus Kunststoff oder Metall abgedeckt ist.

4. Flexibles Solarmodul nach Anspruch 3,
**dadurch gekennzeichnet,**
**dass** die Platte (6) aus PVC-Hartschaum besteht.

5. Flexibles Solarmodul nach Anspruch 1,
**dadurch gekennzeichnet,**
**dass** die Rückseite des Laminats (2) durch eine Schicht (6a) aus witterungsbeständigen, geschlossen-porigen, weich dauer-elastischen Schaumstoff abgedeckt ist.

6. Flexibles Solarmodul nach Anspruch 5,
**dadurch gekennzeichnet,**
**dass** eine Dicke der Schaumstoff-Schicht (6a) größer ist als die Dicke des Rahmens (1) auf seiner Unterseite.

7. Flexibles Solarmodul nach Anspruch nach Anspruch 5,
**dadurch gekennzeichnet,**
**dass** die Schaumstoff-Schicht (6a) rückseitig ganz oder teilweise mit einer Selbstklebe-Schicht (6c) versehen und an den Stellen, die selbstklebend sind, mit einer abziehbaren Schutzfolie (6d) ausgestattet ist.

8. Flexibles Solarstrom-Modul nach Anspruch 1,
**dadurch gekennzeichnet,**
**dass** auf einer Rückseite des Rahmens (1) eine umlaufende Abdichtung aus dauerelastischem Dichtmaterial angebracht ist.

9. Flexibles Solarstrom-Modul nach Anspruch 8,
**dadurch gekennzeichnet,**
**dass** die Abdichtung eine Rundschnur (12a) aus Butylkautschuk mit einer abziehbaren Schutzfolie (12b) ist.

10. Flexibles Solarstrom-Modul nach Anspruch 8 oder 9,
**dadurch gekennzeichnet,**
**dass** in die Rahmenunterseite eine umlaufende Hohlkehle (12c) zur Aufnahme der Dichtung eingeformt ist.

11. Flexibles Solarstrom-Modul nach einem der vorstehenden Ansprüche,
**dadurch gekennzeichnet,**
**dass** der Rahmen (1) Befestigungslochungen erhält, welche an den Ecken des Rahmens (1) an den Stellen der Überlappung der bandförmigen Durchverdrahtung (3a) durch diese hindurchgehen und durch Kunststoff-Buchsen (8) gegen Witterungseinfluss sowie unbeabsichtigten elektrischen Kontakt mit Befestigungs-Schrauben geschützt sind.

12. Verfahren zur Herstellung eines flexiblen, glaslosen Solarmoduls mit einem umlaufenden und die Kanten eines flexiblen Laminats (2) umschließenden Rahmen (1) aus Kunststoff, wobei der Rahmen (1) aus Kunststoff von dauerelastisch-biegsamer Konsistenz besteht und in diesen eine flach-bandförmige Durchverdrahtung (3a) eingeformt ist, die umlaufend in unmittelbarer Nähe der Rahmen-Innenkante auf einer Vorderseite des Laminats (2) verläuft und fest mit diesem verbunden ist,
**dadurch gekennzeichnet,**
**dass** der Rahmen (2) nach dem RIM-Verfahren (reaction injection molding) hergestellt wird, wobei in eine Form zur Rahmenherstellung ein flexibles Laminat (2) eingelegt wird, nachdem auf dessen Vorderseite umlaufend flach-bandförmige Durchverdrahtungen (3a) fest verbunden und an den Enden mit Steckbuchsen (10c) versehen wurden.

13. Verfahren nach Anspruch 12,
**dadurch gekennzeichnet,**
**dass** die feste Verbindung der bandförmigen Durchverdrahtung (3a) am Laminat (2) durch Vernieten und/oder Verkleben erfolgt.

14. Verfahren nach Anspruch 12 oder 13,
**dadurch gekennzeichnet,**
**dass** eine Rückseite des Laminats (2) durch eine biegsame Platte (6) aus Kunststoff oder Metall abgedeckt ist und dass die Platte (6) vor dem Einbringen in eine Form zur Rahmenherstellung durch RIM rückseitig auf dem Laminat (2) fixiert wird.

15. Verfahren nach Anspruch einem der Ansprüche 12 bis 14,
**dadurch gekennzeichnet,**
**dass** die Rückseite des Laminats (2) durch eine Schicht (6a) aus witterungsbeständigen, geschlossen-porigen, weich dauer-elastischen Schaumstoff abgedeckt ist und dass die Schicht (6a) aus Schaumstoff vor dem Einbringen in die Form zur Rahmenherstellung durch RIM rückseitig auf dem Laminat (2) verklebt wird.

16. Verfahren nach Anspruch einem der Ansprüche 12 bis 15,
**dadurch gekennzeichnet,**
**dass** der Rahmen (1) Befestigungslochungen erhält, welche an den Ecken des Rahmens (1) an den Stellen der Überlappung der bandförmigen Durchverdrahtung (3a) durch diese hindurchgehen und durch Kunststoff-Buchsen (8) gegen Witterungseinfluss sowie unbeabsichtigten elektrischen Kontakt mit Befestigungs-Schrauben geschützt sind und dass vor dem Einbringen des Laminats (2) in die Form zur Rahmenherstellung durch RIM die Lochungen für die Befestigung durch das Laminat (2) und die Überlappung der Durchverdrahtung (3a) hindurchgehend vorgenommen und die Buchsen (8) aus isolierendem Kunststoff in die Befestigungslochungen eingesetzt werden.

## Claims

1. Flexible, glassless solar module having a circumferential frame (1) made of plastic, the frame enclosing the edges of a flexible laminate (2),
**characterized in that**
the frame (1) consists of plastic with a permanently elastic bendable consistency and that a flat tape-like through-wiring (3a) is formed into it which runs circumferentially in direct proximity to the inner edge of the frame on a front side of the laminate (2) and is firmly fixed thereto.

2. Flexible solar module of claim 1,
**characterized in that**
sockets (10c) are disposed and are formed into the frame (1) at the ends of the through-wiring (3a).

3. Flexible solar module of claim 1,
**characterized in that**
a back side of the laminate (2) is covered by a bendable plate (6) made of plastic or metal.

4. Flexible solar module of claim 3,
**characterized in that**
the plate (6) consists of rigid PVC foam.

5. Flexible solar module of claim 1,
**characterized in that**
the back side of the laminate (2) is covered by a layer (6a) made of weather-proof, closed-porous, soft permanently elastic foam.

6. Flexible solar module of claim 5,
**characterized in that**
a thickness of the foam layer (6a) is greater than the thickness of the frame (1) on its bottom side.

7. Flexible solar module of claim 5,
**characterized in that**
the foam layer (6a) is provided with a self-adhesive layer (6c) on all or part of its back side and is provided with a peelable protective foil (6d) in the places that are self-adhesive.

8. Flexible solar power module of claim 1,
**characterized in that**
a circumferential seal made of permanently elastic sealing material is disposed on a back side of the frame (1).

9. Flexible solar power module of claim 8,
**characterized in that**
the seal is a round chord (12a) made of butyl rubber with a peelable protective foil (12b).

10. Flexible solar power module of claim 8 or 9,
**characterized in that**
a circumferential groove (12c) is formed into the bottom side of the frame for receiving the seal.

11. Flexible solar power module of one of the preceding claims,
**characterized in that**
the frame (1) receives fixing borings which at the corners of the frame (1) at the places of overlap of the tape-like through-wiring (3a) pass therethrough and are protected by plastic jacks (8) against climatic influence as well as accidental electrical contact with fixing screws.

12. Method of manufacturing a flexible, glassless solar module having a circumferential frame (1) made of plastic, the frame enclosing the edges of a flexible laminate (2), wherein the frame (1) consists of plastic with a permanently elastic bendable consistency and a flat tape-like through-wiring (3a) is formed into it, which runs circumferentially in direct proximity to the inner edge of the frame on a front side of the laminate (2) and is firmly fixed thereto,
**characterized in that**
the frame (2) is manufactured according to the RIM (reaction injection molding) method, wherein a flexible laminate (2) is placed into a form for frame manufacturing after flat tape-like through-wirings (3a) have been circumferentially firmly connected on its front side and have been provided with sockets (10c) at their ends.

13. The method according to claim 12,
**characterized in that**
the firm connection of the tape-like through-wiring (3a) to the laminate (2) is established by riveting and/or adhering.

14. Method of claim 12 or 13,
**characterized in that**
a back side of the laminate (2) is covered by a bendable plate (6) made of plastic or metal and that the plate (6) is fixed to the laminate (2) on the back side before insertion into a form for frame manufacturing through RIM.

15. Method of one of claims 12 to 14,
**characterized in that**
the back side of the laminate (2) is covered by a layer (6a) made of weather-proof, closed-porous, soft permanently elastic foam and that the layer (6a) made of foam is adhered to the laminate (2) on the back side before insertion into the form for frame manufacturing through RIM.

16. Method of one of claims 12 to 15,
**characterized in that**
the frame (1) receives fixing borings which at the corners of the frame (1) at the places of overlap of the tape-like through-wiring (3a) pass therethrough and are protected by plastic jacks (8) against climatic influence as well as accidental electrical contact with fixing screws and that the borings for fixing are made passing through the laminate (2) and the overlap of the through-wiring (3a) before insertion of the laminate (2) into the form for frame manufacturing through RIM and the jacks (8) made of insulating plastic are inserted into the fixing borings.

## Revendications

1. Module solaire flexible sans verre ayant un cadre (1) en matière plastique périphérique et entourant les bords d'un stratifié (2) flexible,
**caractérisé en ce**
**que** le cadre (1) consiste en une matière plastique ayant une consistance durablement élastique flexible, et qu'un câblage (3a) traversant sous forme de ruban plat est formé dans le cadre, qui s'étend de façon périphérique sur un côté avant du stratifié (2), à proximité immédiate du bord intérieur du cadre, et est relié fermement au stratifié.

2. Module solaire flexible selon la revendication 1,
**caractérisé en ce**
**que** des douilles (10c) de connecteur sont montées aux extrémités du câblage (3a) traversant et formées dans le cadre (1).

3. Module solaire flexible selon la revendication 1,
**caractérisé en ce**
**qu'**un côté arrière du stratifié (2) est couvert par une plaque (6) flexible en matière plastique ou en métal.

4. Module solaire flexible selon la revendication 3,
**caractérisé en ce**
**que** la plaque (6) consiste en mousse rigide de PVC.

5. Module solaire flexible selon la revendication 1,
**caractérisé en ce**
**que** le côté arrière du stratifié (2) est couvert par une couche (6a) de mousse résistant aux intempéries, à pores fermées, mollement et durablement élastique.

6. Module solaire flexible selon la revendication 5,
**caractérisé en ce**
**qu'**une épaisseur de la couche (6a) de mousse est supérieure à l'épaisseur du cadre (1) sur son côté inférieur.

7. Module solaire flexible selon la revendication 5,
**caractérisé en ce**
**que** la couche (6a) de mousse est prévue, complètement ou partiellement, d'une couche (3c) autocollante sur l'arrière, et prévue d'une feuille (6d) de protection retirable aux endroits qui sont autocollants.

8. Module solaire flexible selon la revendication 1,
**caractérisé en ce**
**qu'**un joint périphérique en un matériau d'étanchéité durablement élastique est disposé sur un côté arrière du cadre (1).

9. Module solaire flexible selon la revendication 8,
**caractérisé en ce**
**que** le joint est une ganse (12a) en caoutchouc butyle ayant une feuille (12b) de protection retirable.

10. Module solaire flexible selon la revendication 8 ou 9,
**caractérisé en ce**
**qu'**une gorge (12c) périphérique pour recevoir le joint est formée dans le côté inférieur du cadre.

11. Module solaire flexible selon l'une des revendications précédentes,
**caractérisé en ce**
**que** le cadre (1) comprend des perforations de fixation qui traversent le câblage (3) traversant sous forme de ruban aux coins de cadre (1) aux endroits du chevauchement du câblage (3a) traversant sous forme de ruban, et qui sont protégées des intempéries ainsi que d'un contact électrique non intentionnel avec des vis de fixation, par des douilles (8) en matière plastique.

12. Procédé de fabrication d'un module solaire flexible sans verre ayant un cadre (1) en matière plastique périphérique et entourant les bords d'un stratifié (2) flexible, dans lequel le cadre (1) en matière plastique consiste en une matière plastique ayant une consistance durablement élastique flexible, et qu'un câblage (3a) traversant sous forme de ruban plat est formé dans le cadre, qui s'étend de façon périphérique sur un côté avant du stratifié (2), à proximité immédiate du bord intérieur du cadre, et est relié fermement au stratifié,
**caractérisé en ce**
**que** le cadre (2) est fabriqué par le procédé RIM (reaction injection molding = moulage par injection-réaction), un stratifié (2) flexible étant introduit dans un moule pour la fabrication de cadre après que des câblages (3a) traversants sous forme de ruban plat périphériques aient été reliés fermement sur son côté avant et prévus de douilles (10e) de connecteur aux extrémités.

13. Procédé selon la revendication 12,
**caractérisé en ce**
**que** la liaison ferme du câblage (3a) traversant sous forme de ruban avec le stratifié (2) est effectuée par rivetage et/ou collage.

14. Procédé selon la revendication 12 ou 13,
**caractérisé en ce**
**qu'**un côté arrière du stratifié (2) est couvert par une plaque (6) flexible en matière plastique ou en métal, et que la plaque (6) est fixée sur le stratifié (2) à l'arrière avant l'introduction dans un moule pour la fabrication de cadre par le procédé RIM.

15. Procédé selon l'une des revendications 12 à 14,
**caractérisé en ce**
**que** le côté arrière du stratifié (2) est couvert par une couche (6a) de mousse résistant aux intempéries, à pores fermées, mollement et durablement élastique, et que la couche (6a) de mousse est collée sur le stratifié (2) à l'arrière avant l'introduction dans le moule pour la fabrication de cadre par le procédé RIM.

16. Procédé selon l'une des revendications 12 à 15,
**caractérisé en ce**
**que** le cadre (1) comprend des perforations de fixation qui traversent le câblage (3a) traversant sous forme de ruban aux coins du cadre (1) aux endroits du chevauchement du câblage (3a) traversant sous forme de ruban, et sont protégées des intempéries ainsi que d'un contact électrique non intentionnel avec des vis de fixation, par des douilles (8) en matière plastique, et que les perforations pour la fixation par le stratifié (2) et le chevauchement du câblage (3a) traversant sont effectuées de manière traversante et les douilles (8) en matière plastique isolante sont insérées dans les perforations de fixation, avant l'introduction du stratifié (2) dans le moule pour la fabrication de cadre par le procédé RIM.
